# EUROPEAN PATENT SPECIFICATION

(11) **EP 1 446 283 B1**
(45) Date of publication and mention of the grant of the patent: **18.05.2011**
(21) Application number: 02775878.8
(22) Date of filing: 19.09.2002
(51) Int. Cl.: B41M 1/30, A01G 5/00

(54) **PROVIDING AN IMAGE ON A FLOWER**
BEREITSTELLUNG EINES BILDES AUF EINER BLUME
FORMATION D'UNE IMAGE SUR UNE FLEUR

(30) Priority: 26.09.2001 US 964989
(43) Date of publication of application: 18.08.2004
(73) Proprietor: Florabella International, LLC, Layton UT 84041 (US)
(72) Inventor: Walker, Roland N., Idahl Falls ID 83402 (US)
(74) Representative: Wilson, Peter David
(86) International application number: PCT/US2002/029771
(87) International publication number: WO 2003/027768

(56) References cited:
- US-A- 3 607 526
- US-A- 5 142 976
- US-A- 5 305 550
- US-A- 5 424 141
- US-B1- 6 172 328
- US-B1- 6 272 983

## Description

### 1. Field of the Invention

The present invention relates to systems and methods for providing an image on a flower. More particular, the present invention relates to systems and methods for providing an image, such as one or more characters, symbols, pictures and/or designs, onto a flower or portion thereof.

### 2. Background and Related Art

Organic products, such as flowers and fruit, are commonly exchanged as gifts for a variety of reasons. For example, flowers are given to celebrate such occasions as anniversaries, birthdays, graduations, promotions, retirements, and other meaningful events. Flowers have also been used to express feelings of appreciation, friendship, love, romance, and sympathy. Similarly, fruit and/or other organic products have been packaged into gift baskets and exchanged as holiday gifts.

When an organic product is delivered as a gift to the intended recipient, a card that is written by the purchaser or by another individual on behalf of the purchaser typically accompanies the gift. For example, a purchaser may contact a local florist to place an order for one or more flowers that are to be given as a gift to a particular recipient. The purchaser may receive the flowers and deliver them personally or may allow the florist to deliver the flowers to the intended recipient on behalf of the purchaser. When the purchaser is present at the local floral shop, the purchaser may express his/her feelings on a card that will accompany the delivery of the flowers. Alternatively, when not in person at the floral shop, an employee of the shop may prepare a card on behalf of the purchaser that will accompany the flowers when delivered and that expresses the sentiments of the purchaser.

While the flowers provide a gift to the recipient, it is the card that is the medium used to communicate a particular message or expression from the purchaser to the recipient.

When the flowers are delivered without a card, the recipient is required to interpret the meaning of the gift, which can result in an erroneous conclusion.

It is known from US Patent 5,305,550 to individually write on the petals of a flower using a pen. In addition, US 5,142,976 discloses a machine for printing on uncooked poultry eggs whereby a decorative motif is affixed to the shell by tampography comprising an inking pad which is pressed against the shell of the egg.

### SUMMARY OF THE INVENTION

According to a first aspect of the invention, there is provided a method for providing an image on a flower petal, characterised by the steps of creating an image on a transfer medium and overlaying the image onto a flower petal, wherein the transfer medium comprises a pad having an outer convex surface on which a negative of the image is provided, the method further comprising rolling the outer surface of the pad onto the surface of the flower petal to transfer the image onto the flower petal.

Implementation of the present invention takes place in association with at least a portion of a flower. An image is provided on a transfer medium and then printed from the transfer medium on the portion of the flower to provide a communication to the recipient. The image may include feelings of expression, such as the words "I Love You" "Congratulations" "Thank You" "I'm Sorry, ""Merry Christmas" or "Happy Birthday". Alternatively, the image may be a logo of a company and optionally may include a particular number of years that the recipient has worked for the company. As such, the printing on the flower individualizes the flower.

In one implementation, the image that is to be printed onto the flower, is photo-etched into a photosensitive material of a cliché, such as a printing plate or plane, by the use of a film positive. Ink is then applied to the cliché and a transfer medium is pressed onto the cliché in order to lift ink from the image area of the cliché and create a negative image on the transfer medium. The medium is used to transfer the inked image onto a flower petal or leaf. The transferred image is then allowed to dry so as to remain on the flower petal or leaf and may be used to communicate a message to and/or individualize the gift for the intended recipient.

The methods and processes of the present invention are particularly useful in the floricultural industry.

The present invention may provide a product comprising a group of flowers each comprising one or more petals; and an overlaid identical pad-printed image provided on at least one petal of each flower of said group of flowers.

The present invention may provide a system comprising: a group of flowers; a transfer medium; and a repeatable, identical, pad-printed image, wherein the image is located on a portion of the transfer medium and is overlaid onto the flowers.

These and other features and advantages of the present invention will be set forth or will become more fully apparent in the description that follows and in the appended claims. The features and advantages may be realized and obtained by means of the instruments and combinations particularly pointed out in the appended claims. Furthermore, the features and advantages of the invention may be learned by the practice of the invention or will be obvious from the description, as set forth hereinafter.

### BRIEF DESCRIPTION OF THE DRAWINGS

In order that the manner in which the above recited and other features and advantages of the present invention are obtained, a more particular description of the invention will be rendered by reference to specific embodiments thereof, which are illustrated in the appended drawings. Understanding that the drawings depict only typical embodiments of the present invention and are not, therefore, to be considered as limiting the scope of the invention, the present invention will be described and explained with additional specificity and detail through the use of the accompanying drawings in which:
Figure 1 provides an illustration of a representative image that is created on a cliché in preparation for providing the image onto an organic product;
Figure 2 provides a representative press that may be used to create an image that is a negative to the image created in the cliché ;
Figure 3 provides an illustration of the negative image being transferred from the transfer medium to an organic product;
Figure 4 illustrates a flow chart that provides a representative method for providing an image on an organic product; and
Figure 5 provides an example of one or more organic products having an image placed thereon in accordance with the present invention.

### DETAILED DESCRIPTION OF THE INVENTION

The present invention relates to a method for providing an image on flower petal. More particular, the present invention relates to a method for providing an image, such as one or more characters, symbols, pictures and/or designs, onto said flower petal.

In the disclosure the term "organic product" shall refer to petals of a flower that may be used for receiving an image thereon. Furthermore, in the disclosure and in the claims the term "image" shall refer to a visual representation that may be provided onto an organic product. Examples of images include one or more characters (e. g. letters, numbers, or other characters), logos, pictures, symbols, illustrations, designs, icons, emblems, trademarks, other representations, and any combination thereof.

Embodiments of the present invention embrace providing one or more images onto at least a portion of an organic product. The images are provided onto the portion of the organic product to provide a communication to the recipient and/or to individualize the product. The image may include feelings of expression, such as the words "I Love You" "Congratulations" "Thank You" "I'm Sorry" "Merry Christmas" or "Happy Birthday". Alternatively, the image may be a logo of a company and optionally may include a particular number of years that the recipient has worked for the company.

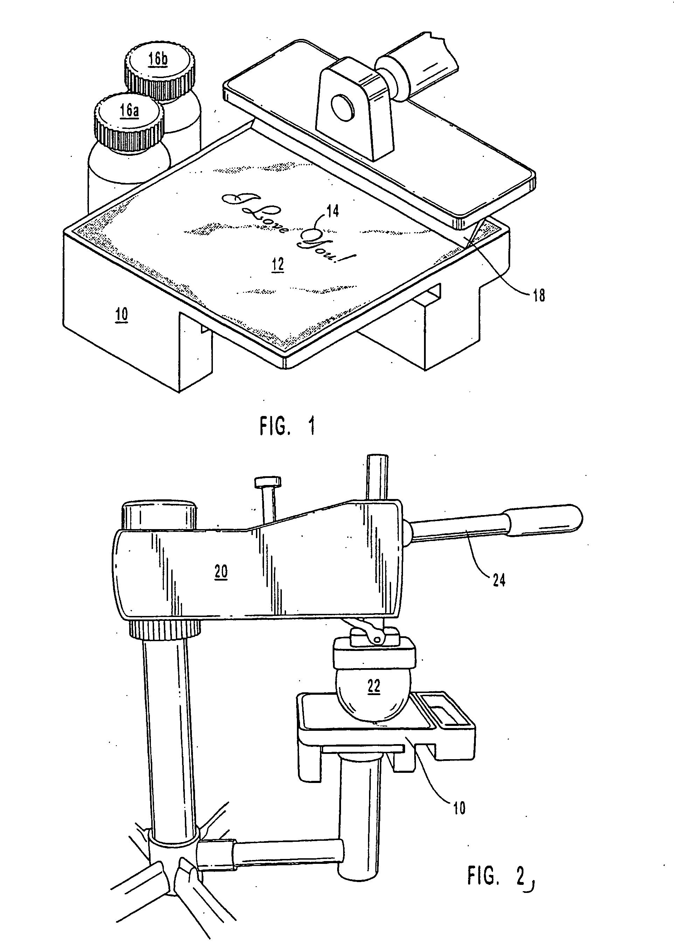

With reference to Figures1-4, an embodiment of the present invention is illustrated as a representative method for providing an image onto an organic product. In the method, an image is transferred onto flower petal through the use of a transfer printing technique.

In Figure 1, a cliché, illustrated as plate 10, is provided that includes a photosensitive material 12. While Figure 1 illustrates the cliché as a plate, other clichés may be used such as a printing plane or other surface that allows an image to be etched therein.

In the present embodiment, an image is etched into the photosensitive material by taking a copy of an image and creating a film positive of the image. (The film positive is the image on clear film). Once the film positive is created, the photosensitive material of plate 10 is exposed through a wash out process in order to form the etched image 14 in the photosensitive material 12 of plate 10.

Figure 1 illustrates containers 16, which are used to house ink (not shown). By way of example, container 16a may house one type of ink, such as black ink, and container 16b may house another type of ink, such as gold ink. Once the etched image 14 is created, ink is applied to the plate 10 so as to fill the etched image 14 on plate 10. A blade 18 is used to spread the ink so as to fill the etched image 14 with ink and to remove any excess ink from the plate 10.

In Figure 2, plate 10 is coupled to a mechanical press 20, which includes a transfer medium, illustrated as pad 22, and a lever 24. Plate 10 may be selectively coupled to press 20 so that the process of creating the etched image 14 is performed prior to coupling plate 10 to press 20. This further allows for the use of a plurality of removable plates that may be selectively used in association with press 20, wherein each plate includes a different image etched thereon.

As a user of press 20 pulls lever 24 in a downward direction, pad 22 lowers and is placed in contact with the surface of plate 10. Similarly, as the user releases or lifts in an upward direction, lever 24 is raised so as to no longer be in contact with plate 10. The process of lowering pad 22 so as to contact plate 10 and of raising pad 22 causes ink to be lifted from the etched image 14 of Figure 1 so as to create a negative of the image on pad 22.

In one embodiment, pad 22 swivels to facilitate a transfer of the image onto a flower petal. In another embodiment, pad 22 is selectively removed by the user from mechanical press 20 of Figure 2 so as to transfer the image onto a flower petal.

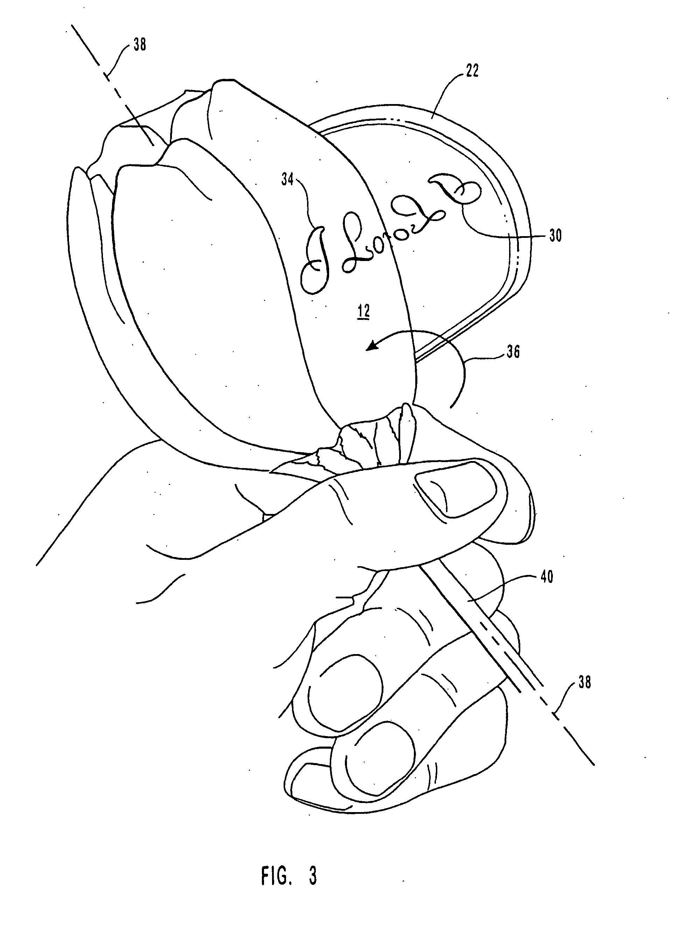

With reference to Figure 3, a portion of the surface of pad 22 is illustrated that includes the created negative image, illustrated as negative image 30. A flower petal 32 is placed in contact with negative image 30 to provide the image 34 on the flower petal 32. In one embodiment, and as illustrated by arrow 36, the flower petal is placed in contact with the surface of pad 22 to transfer a clean print of image 34 onto the flower petal 32. While the printed image 34 illustrated in Figure 3 is located transverse to the central axis 38 of flower 40, the image may be transferred to any location of petal 32 with relation to axis 38. Furthermore, a plurality of images may be transferred onto flower 40.

The transfer medium illustrated in Figures 2 and 3 is a pad. It is the purpose of the transfer medium to transfer the image from a plate or printing plane, often referred to as a cliché, to a surface of the flower petal.

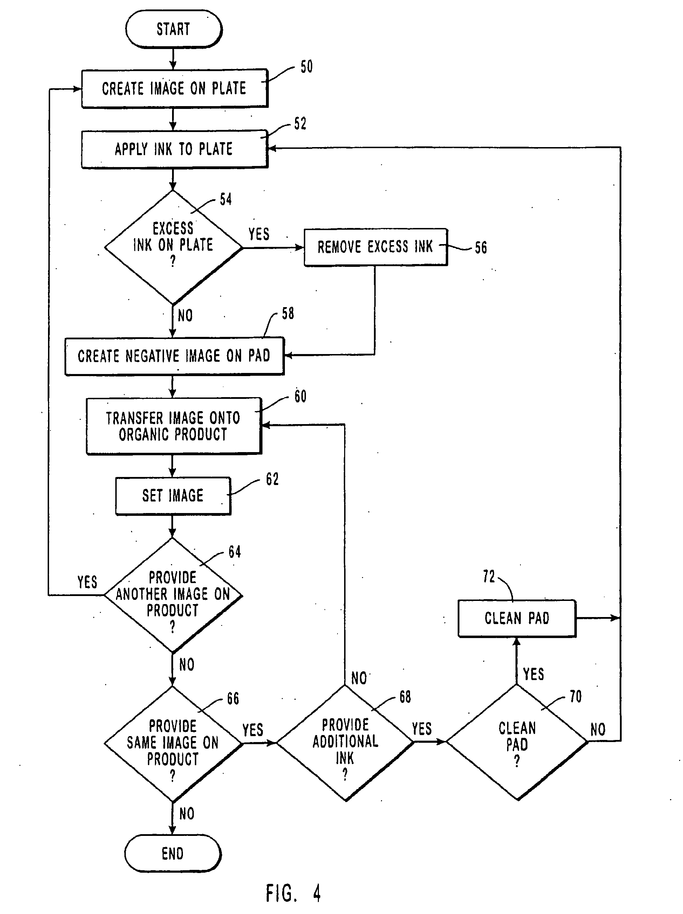

With reference to Figure 4, a flow chart illustrates a representative method used in accordance with the present invention to provide an image on an organic product. In Figure 4, execution begins at step 50, where an image is created on a cliché, such as plate 10 of Figure 1. One manner for creating the image, as provided above, is by etching the image into a photosensitive material of the plate, which is done by taking a copy of an image and creating a film positive of the image. Once the film positive is created, the photosensitive material of the plate is exposed through a wash out process in order to form the etched image into the photosensitive material of the plate. Execution then proceeds to step 52.

At step 52, ink is applied to the cliché or plate. The ink is applied so as to fill the image created at step 50. A determination is then made at decision block 54 as to whether or not excess ink is located on the plate. If it is determined at decision block 54 that no excess ink is located on the plate, execution proceeds to step 58. However, if it is determined at decision block 54 that excess ink is located on the plate, execution proceeds to step 56, where the excess ink is removed. As provided above, one manner of removing the excess ink is by utilizing a blade, such as blade 18 of Figure 1. Once the excess ink is removed, execution proceeds to step 58.

At step 58 a negative image is created on a transfer medium, such as pad 22 of Figure 2. The negative image is created, for example, by causing a pad to be placed in contact with the inked image on the plate. The pad lifts ink from the pad so as to create a negative image on the pad. At step 60 the image is then transferred onto an organic product. This is performed by rolling the surface of the pad that includes the negative image onto the surface of a flower petal Execution then proceeds to step 62, where the image on the flower petal is set, such as by allowing the printed image to dry.

At decision block 64 a decision is made as to whether or not to provide another image on the product. At times it is advantageous to place a first image at a first location of an organic product and a second image at a second location of the product. Alternatively, it is advantageous to place a first image in a first colour (e. g. black) at a first location and a second image, which is similar to the first image except more narrow, in a second colour (e.g. gold) on top of the first image. Therefore, the combination of the two images provides the appearance of a single image that is gold with a black border.

Thus, if it is determined at decision block 64 that another image is to be provided on the product, execution returns back to step 50, where the subsequent image is created. The subsequent image may be the same image that is prepared with a different ink or may be an entirely different image. The ink is applied to the subsequent image at step 52 and a determination is made at decision block 54 as to whether or not any excess ink is located on the plate. If excess ink is present, it is removed at step 56, otherwise execution proceeds to step 58 for the creation of a negative of the subsequent image on a pad. The image is transferred onto the organic product at step 60 and is set at step 62. A determination is then made at decision block 64 as to whether or not to apply or provide another image onto the organic product. If yet another image is to be provided, execution returns again to step 50.

Once it is determined at decision block 64 that another image is not to be provided, execution proceeds to decision block 66 for a determination as to whether or not the same image is to be provided onto another organic product. If it is determined that the same image is to be provided onto another organic product, execution proceeds to decision block 68 for a determination as to whether or not to provide additional ink to the transfer medium or pad. If it is determined that no additional ink is needed on the pad, execution returns to step 60, where the image is transferred onto the other organic product and is allowed to set. If another image is to be provided on the other product, execution returns back to step 50.

Returning back to decision block 68, if it is determined that additional ink is needed to transfer the image onto another product, execution proceeds to decision block 70 for a determination as to whether or not to clean the transfer medium or pad. If it is determined that the pad does not need to be cleaned execution returns back to step 52. Alternatively, if it is determined that the pad needs to be cleaned, execution proceeds to step 72, where the pad is cleaned, and then to step 52, where additional ink is applied to the plate. Any excess ink is removed at step 56, a negative is created on the pad at step 58, the image is transferred onto the organic product at step 60, and the image is set at step 62.

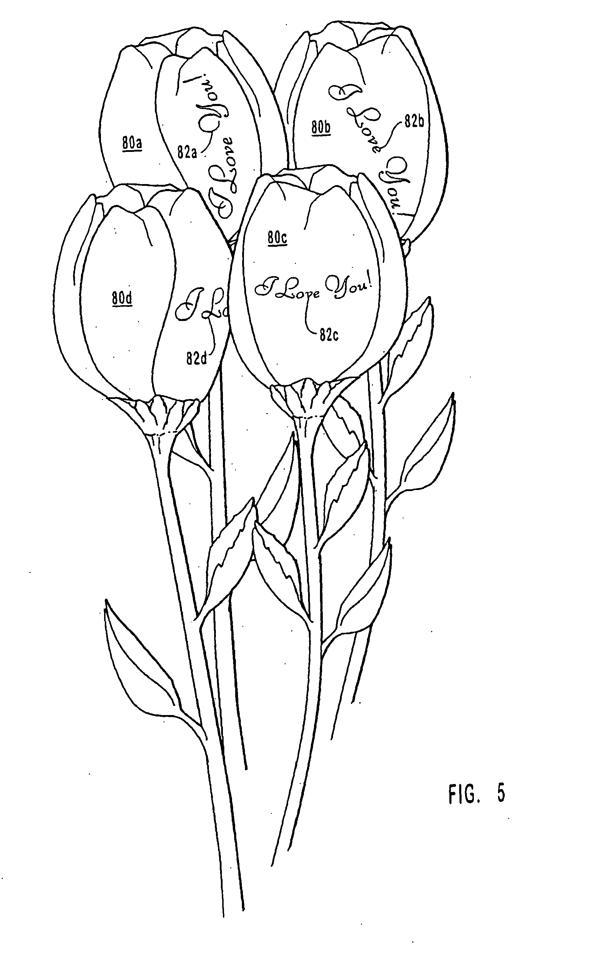

With reference to Figure 5, an illustration is provided of organic products 80 that have images 82 thereon that may be used to communicate a message to an intended recipient or otherwise individualize the organic products for the recipient. As illustrated by images 82, the image may be provided in a variety of directions with respect to the central axis of a particular organic product 80.

Thus, as discussed herein, the embodiments of the present invention embrace systems and methods for providing an image on the petals of a flower. More particular, the present invention relates to systems and methods for providing an image, such as one or more characters, symbols, pictures and/or designs, onto a flower petal.

## Claims

1. A method for providing an image on a flower petal, **characterised by** the steps of creating an image (14) on a transfer medium (22) and overlaying the image onto a flower petal wherein the transfer medium comprises a pad (22) having an outer convex surface on which a negative of the image is provided, the method further comprising rolling the outer surface of the pad (22) onto the surface of the flower petal to transfer the image onto the flower petal.

2. A method according to Claim 1 wherein the method comprises providing an image which is transverse to a central axis of a flower.

3. A method as claimed in any preceding claim, wherein the step for creating an image comprises the steps of creating a first image on a cliché (10); applying ink to the cliché; and lifting at least a portion of the ink from the cliché to form a second image, wherein the second image is the image created on the transfer medium (22).

4. A method as claimed in Claim 3, wherein the step for lifting comprises the steps of placing the transfer medium (22) in contact with the cliché (10); and removing the transfer medium from the cliché.

5. A method as claimed in Claim 3 or Claim 4, wherein the step for creating a first image comprises etching the first image into the cliché (10).

6. A method as claimed in any one of Claims 3 to 5, wherein the cliché comprises a photosensitive material.

7. A method as claimed in Claim 6 when dependent upon Claim 5, wherein the etching comprises the steps of providing a third image; creating a film positive of the third image; and exposing the photosensitive material through a wash out process to etch the third image into the photosensitive material.

8. A method as claimed in any preceding claim, wherein the flower (40) is one of a group of flowers, each having the repeatable pad-printed image printed thereon.

9. A method as claimed in any preceding claim, wherein the image (14) transferred onto the flower petal comprises at least one of:
(i) a character;
(ii) a number;
(iii) a logo;
(iv) a picture;
(v) a symbol;
(vi) a design;
(vii) an icon; or
(viii) a trademark.

## Patentansprüche

1. Ein Verfahren zur Bereitstellung eines Bildes auf einem Blütenblatt **gekennzeichnet durch** die Schritte des Herstellens eines Bildes (14) auf einem Übertragungsmedium (22) und Einblenden des Bildes auf ein Blütenblatt, wobei das Übertragungsmedium einen Block (22) mit einer äußeren konvexen Oberfläche umfasst, auf welcher ein Negativ des Bildes bereitgestellt wird, wobei das Verfahren des Weiteren das Rollen der äußeren Oberfläche des Blockes (22) auf der Oberfläche des Blütenblattes zur Übertragung des Bildes auf das Blütenblatt umfasst.

2. Ein Verfahren gemäß Anspruch 1, wobei das Verfahren das Bereitstellen eines Bildes umfasst, welches querlaufend zu einer Mittelachse einer Blume ist.

3. Ein Verfahren gemäß einem der vorhergehenden Ansprüche, wobei der Schritt der Erstellung eines Bildes die Schritte des Erstellen eines ersten Bildes auf einer Druckplatte (10), das Auftragen von Tinte auf die Druckplatte und das Anheben von mindestens einem Bereich der Tinte von der Druckplatte zur Ausbildung eines zweiten Bildes umfasst, wobei das zweite Bild das auf dem Übertragungsmedium (22) erzeugte Bild ist.

4. Ein Verfahren gemäß Anspruch 3, wobei der Schritt des Anhebens die Schritte des Anordnens des Übertragungsmediums (22) in Kontakt mit der Druckplatte (10) und das Entfernen des Übertragungsmediums von der Druckplatte umfasst.

5. Ein Verfahren gemäß der Ansprüche 3 oder 4, worin der Schritt des Erzeugens eines ersten Bildes das Einätzen des ersten Bildes in die Druckplatte (10) umfasst.

6. Ein Verfahren gemäß einem der Ansprüche 3 bis 5, wobei die Druckplatte ein fotosensitives Material umfasst.

7. Ein Verfahren gemäß Anspruch 6, wenn abhängig von Anspruch 5, wobei das Ätzen die Schritte des Bereitstellens eines dritten Bildes, die Erzeugung eines Filmpositiven des dritten Bildes, und Exponieren des fotosensitiven Materials durch einen Auswaschprozess, um das dritte Bild in das fotosensitive Material zu ätzen, umfasst.

8. Ein Verfahren gemäß einem der vorhergehenden Ansprüche, wobei die Blume (40) eine aus einer Gruppe von Blumen ist, wobei jede Blume das darauf abgedruckte reproduzierbare Bild aufweist, das vom Block aufgedruckt wurde.

9. Ein Verfahren gemäß einem der vorhergehenden Ansprüche, wobei das auf das Blütenblatt übertragene Bild (14) mindestens ein von
(i) einen Buchstaben,
(ii) eine Zahl,
(iii) ein Logo,
(iv) ein Bild,
(v) ein Symbol,
(vi) ein Design,
(vii) ein Bildzeichen oder
(viii) einen Markennamen umfasst.

## Revendications

1. Procédé pour fournir une image sur un pétale de fleur, **caractérisé par** les étapes consistant à créer une image (14) sur un support de transfert (22) et à superposer l'image sur un pétale de fleur, dans lequel le support de transfert comprend un tampon ayant une surface convexe extérieure sur laquelle un négatif de l'image est fourni, le procédé comprenant en outre le roulement de la surface extérieure du tampon (22) sur la surface du pétale de fleur pour transférer l'image sur le pétale de fleur.

2. Procédé selon la revendication 1, dans lequel le procédé comprend la fourniture d'une image qui est transversale à un axe central d'une fleur.

3. Procédé selon l'une quelconque des revendications précédentes, dans lequel l'étape de création d'une image comprend les étapes consistant à créer une première image sur un cliché (10) ; appliquer de l'encre sur le cliché ; et soulever au moins une partie de l'encre du cliché pour former une deuxième image, dans lequel la deuxième image est l'image créée sur le support de transfert (22).

4. Procédé selon la revendication 3, dans lequel l'étape de soulèvement comprend les étapes consistant à placer le support de transfert (22) en contact avec le cliché (10) ; et à enlever le support de transfert du cliché.

5. Procédé selon la revendication 3 ou 4, dans lequel l'étape de création d'une première image comprend l'étape consistant à graver la première image dans le cliché (10).

6. Procédé selon l'une quelconque des revendications 3 à 5, dans lequel le cliché comprend une matière photosensible.

7. Procédé selon la revendication 6 lorsqu'elle est dépendante de la revendication 5, dans lequel la gravure comprend les étapes consistant à fournir une troisième image ; créer un film positif de la troisième image ; et exposer la matière photosensible à travers un processus de lavage pour graver la troisième image dans la matière photosensible.

8. Procédé selon l'une quelconque des revendications précédentes, dans lequel la fleur (40) est l'une d'un groupe de fleurs sur chacune desquelles est imprimée l'image par tampon répétitive.

9. Procédé selon l'une quelconque des revendications précédentes, dans lequel l'image (14) transférée sur le pétale de fleur comprend au moins l'un de :
(i) un caractère ;
(ii) un nombre ;
(iii) un logo ;
(iv) une photo ;
(v) un symbole ;
(vi) un design ;
(vii) une icône ; ou
(viii) une marque de fabrique.
